# EUROPEAN PATENT SPECIFICATION

(11) **EP 3 718 907 B1**
(45) Date of publication and mention of the grant of the patent: **15.02.2023**
(21) Application number: 18882958.4
(22) Date of filing: 12.10.2018
(51) Int. Cl.: B65B 9/207, B65B 9/20, B65B 31/04, B65B 51/10

(54) **BAG-MAKING PACKAGING MACHINE**
VERPACKUNGSMASCHINE ZUR HERSTELLUNG VON BEUTELN
MACHINE D'EMBALLAGE FABRICANT DES SACS

(30) Priority: 30.11.2017 JP 2017230636
(43) Date of publication of application: 07.10.2020
(73) Proprietor: Ishida Co., Ltd., Kyoto-shi, Kyoto 606-8392 (JP)
(72) Inventor: SHIMODA, Takafumi, Ritto-shi Shiga 520-3026 (JP)
(74) Representative: Gill Jennings & Every LLP
(86) International application number: PCT/JP2018/038089
(87) International publication number: WO 2019/106974

(56) References cited:
- JP-A- H0 740 909
- JP-A- H0 740 909
- JP-A- 2012 250 766
- JP-A- 2015 058 964
- JP-A- 2015 058 964
- JP-B2- S6 362 418
- US-A1- 2006 107 619
- US-A1- 2012 198 799

## Description

### TECHNICAL FIELD

The present invention relates to a bag-making and packaging machine that makes bags filled with product.

### BACKGROUND ART

Bag-making and packaging machines that perform sealing by means of ultrasonic waves have become widespread in recent years. For example, in the bag-making and packaging machine disclosed in patent document 1 (JP-ANo. 2015-58964), a horn and an anvil that comprise a pair transversely seal, by means of ultrasonic waves along a direction intersecting a conveyance direction of, a cylindrical film sandwiched between them, and, in accordance with the timing of the transverse sealing, a knife moves from the anvil side toward the horn to thereby cut a predetermined position of the transversely sealed portion.

### SUMMARY OF INVENTION

### <Technical Problem>

However, the distal end portion of the horn when generating the ultrasonic waves slides easily, and there is the concern that the film will be pulled when the knife cuts the transversely sealed portion, resulting in the cutting position shifting.

It is a problem of the present invention to provide a bag-making and packaging machine that can prevent the position at which transversely sealed portions are cut from shifting.

### <Solution to Problem>

A bag-making and packaging machine pertaining to a first aspect of the invention makes bags by forming into a cylindrical shape a film that is conveyed and putting product inside the cylindrical film, the bag-making and packaging machine including a pair of ultrasonic sealing members, a cutting member, and clamps. The pair of sealing members sandwich the cylindrical film along a direction intersecting its conveyance direction and perform transverse sealing. The cutting member moves between the pair of sealing members and cuts transversely sealed portions of bags that have been made. The clamps are provided under the pair of sealing members and the cutting member and restrain the bags when the transversely sealed portions are cut.

In this bag-making and packaging machine, tension in a direction in which the bags are lifted up occurs when the cutting member cuts the transversely sealed portions, but because the portions under the transversely sealed portions are restrained by the clamps, the bags are not lifted up and shifting of the cutting position is prevented.

A bag-making and packaging machine pertaining to a second aspect of the invention is the bag-making and packaging machine pertaining to the first aspect, further including a film conveyance unit. The film conveyance unit is provided above the pair of sealing members and the cutting member and conveys the cylindrical film. Moreover, the film conveyance unit restrains the cylindrical film when the transversely sealed portions are cut.

In this bag-making and packaging machine, the film conveyance unit restrains the cylindrical film above the sealing members performing transverse sealing, so there is no need to provide clamps above.

A bag-making and packaging machine pertaining to a third aspect of the invention is the bag-making and packaging machine pertaining to the first aspect or the second aspect, wherein when the transversely sealed portions are cut, the bags under the cutting position hang down from the transversely sealed portions.

In this bag-making and packaging machine, although conventionally there are configurations that pull down the cylindrical film with clamps, they do not prevent bags hanging down from the transversely sealed portions from being lifted up during cutting.

A bag-making and packaging machine pertaining to a fourth aspect of the invention is the bag-making and packaging machine pertaining to any one of the first aspect to the third aspect, wherein the size of the bags that can be made is 100 to 500 mm. Furthermore, a height direction center-to-center distance between the clamps and the cutting member is 10 to 80 mm.

In this bag-making and packaging machine, numerical values are regulated because it is not preferable for the clamps and the cutting member to be unduly away from each other. Because of this, even if there are contents in the upper portion of a bag, a situation where the contents are compressed by the clamps is avoided.

A bag-making and packaging machine pertaining to a fifth aspect of the invention is the bag-making and packaging machine pertaining to any one of the first aspect to the fourth aspect, wherein the bag-making and packaging machine performs continuous bag-making in which it makes bags while continuously conveying the cylindrical film.

### <Advantageous Effects of Invention>

In the bag-making and packaging machine pertaining to the invention, tension in a direction in which the bags are lifted up occurs when the cutting member cuts the transversely sealed portions, but because the portions under the transversely sealed portions are restrained by the clamps, the bags are not lifted up and shifting of the cutting position is prevented.

### BRIEF DESCRIPTION OF DRAWINGS

FIG 1 is an external perspective view of a bag-making and packaging machine pertaining to an embodiment of the invention.
FIG. 2 is a schematic side view of a main portion of the bag-making and packaging machine.
FIG 3 is a right side view of a bag-making and packaging unit.
FIG 4 is a sectional view along line A-A of FIG 3.
FIG 5 is a perspective view of a pair of sealing jaws.
FIG 6Ais a side sectional view of the area around the sealing jaws before transverse sealing.
FIG 6B is a side sectional view of the area around the sealing jaws during transverse sealing.
FIG 6C is a side sectional view of the area around the sealing jaws just after transverse sealing.
FIG 7 is a control block diagram of the bag-making and packaging machine.
FIG 8 is a time chart of a continuous mode and an intermittent mode.
FIG 9 is a conceptual view of a transverse sealing mechanism of the bag-making and packaging machine pertaining to an example modification.

### DESCRIPTION OF EMBODIMENT

An embodiment of the invention will be described below with reference to the drawings.

### (1) Configuration of Bag-making and Packaging Machine 1

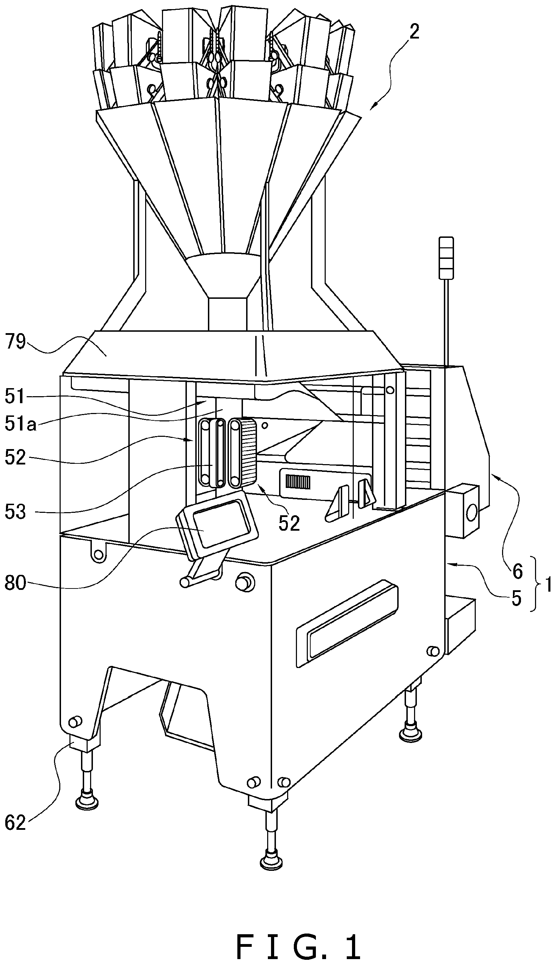

FIG 1 is an external perspective view of a bag-making and packaging machine 1 pertaining to an embodiment of the invention. In FIG 1, the bag-making and packaging machine 1 is a machine that bags articles (product) to make bagged products (bags B). The bag-making and packaging machine 1 is mainly configured from a bag-making and packaging unit 5, which is the main portion that performs bagging of the articles, and a film supply unit 6, which supplies a film F that becomes the bags B to the bag-making and packaging unit 5.

The articles to be bagged by the bag-making and packaging unit 5 are weighed by a combination weighing unit 2 disposed above. The bag-making and packaging unit 5 performs bagging of the articles in accordance with the timing when the articles are supplied from the combination weighing unit 2.

The bag-making and packaging machine 1 is also equipped with an operation panel 80 that shows the operating status. The operation panel 80 is covered with a touch panel and also functions as an input unit for a user to input various types of settings relating to the bag-making and packaging machine 1.

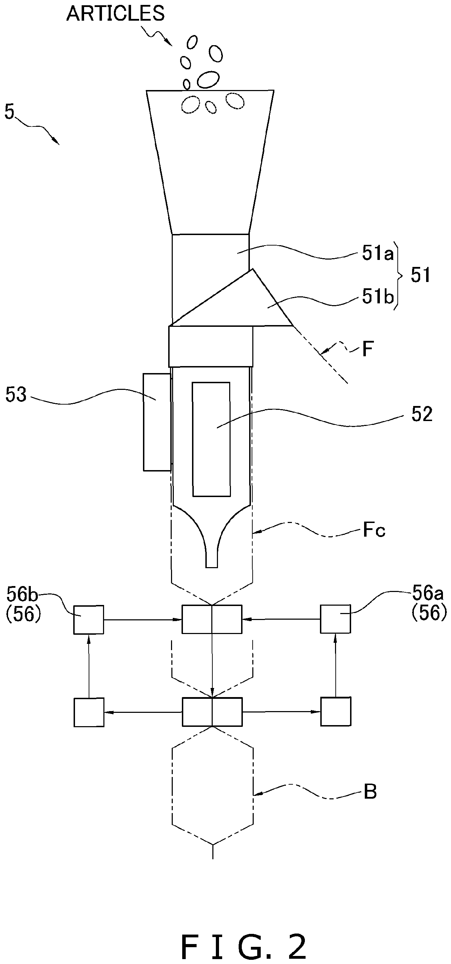

FIG 2 is a schematic side view of the main portion of the bag-making and packaging machine 1. The bag-making and packaging machine 1 makes the bags B by longitudinally sealing, by means of a longitudinal sealing mechanism 53, the sheet-like film F supplied from the film supply unit 6 (see FIG 1) to form a cylindrical film Fc and thereafter transversely sealing, by means of a transverse sealing mechanism 56, the cylindrical film Fc.

Furthermore, the bag-making and packaging machine 1 can switch the sealing operation of the transverse sealing mechanism 56 to either continuous or intermittent in accordance with the settings input by the user to the operation panel 80 (see FIG 1).

### (2) Configurations of Each Unit

Next, the configurations of the units included in the bag-making and packaging machine 1 will be described.

### (2-1) Film Supply Unit 6

As shown in FIG 1, the film supply unit 6 is a unit that supplies the sheet-like film F to a forming mechanism 51 of the bag-making and packaging unit 5. The film supply unit 6 is provided adjacent to the bag-making and packaging unit 5. A film roll into which the film F is wound is set in the film supply unit 6. The film F is unreeled from the film roll and supplied to the forming mechanism 51.

### (2-2) Bag-making and Packaging Unit 5

The bag-making and packaging unit 5 makes the bags B by forming the sheet-like film F into a cylindrical shape and filling it with articles.

### (2-2-1) Forming Mechanism 51

As shown in FIG 2, the forming mechanism 51 has a tube 51a and a former 51b.

The tube 51a is a tubular member that extends in the longitudinal direction and has openings in its upper and lower ends. As shown in FIG 1, the tube 51a is disposed in an open portion in the center of a hood 79 of a support frame 62 and is integrated with the former 51b via a bracket (not shown in the drawings).

The opening in the upper end of the tube 51a has a funnel shape, and articles that have been weighed by the combination weighing unit 2 (see FIG 1) are input through the opening with the funnel shape and fall through the inside of the tube 51a.

The former 51b is disposed so as to surround the tube 51a. The shape of the former 51b is a shape by which the sheet-like film F delivered from the film supply unit 6 is formed into a cylindrical shape when it passes through a gap between the former 51b and the tube 51a. The former 51b is also secured to the support frame 62 via a support member not shown in the drawings.

### (2-2-2) Pull-down Belt Mechanisms 52

Pull-down belt mechanisms 52 are supported by a support member (not shown in the drawings) hanging down from the hood 79 of the support frame 62. The pull-down belt mechanisms 52 are disposed bilaterally symmetrically on either side of the tube 51a.

The pull-down belt mechanisms 52 extend along the longitudinal direction of the tube 51a and convey downward, while sucking hold of, the cylindrical film Fc wrapped around the tube 51a. That is, the pull-down belt mechanisms 52 are a film conveyance unit.

### (2-2-3) Longitudinal Sealing Mechanism 53

The longitudinal sealing mechanism 53 is supported by a support member (not shown in the drawings) hanging down from the hood 79 of the support frame 62 and is disposed so as to extend longitudinally along the tube 51a.

The longitudinal sealing mechanism 53 is a mechanism that heats and longitudinally seals, while pressing with a certain pressure against the tube 51a, an overlapping portion of the cylindrical film Fc wrapped around the tube 51a. The longitudinal sealing mechanism 53 has a heater and a heater belt that is heated by the heater and contacts the overlapping portion of the cylindrical film Fc.

### (2-2-4) Transverse Sealing Mechanism 56

As shown in FIG 2, the transverse sealing mechanism 56 moves in the shape of a box as seen in a side view. That is, the transverse sealing mechanism 56 has members that continuously undergo a box motion in which they move horizontally toward each other, come into opposing contact with each other while sandwiching the cylindrical film Fc from front and back, then move in that state downward at a speed equal to that of the cylindrical film Fc, then move horizontally away from each other, and thereafter move upward to return to their original positions.

Moving the transverse sealing mechanism 56 in a box motion is well known; for example, the transverse sealing mechanism 56 can be moved in a box motion using drive motors for horizontal movement and drive motors for vertical movement. The transverse sealing mechanism 56 will be described below.

### (3) Details of Transverse Sealing Mechanism 56

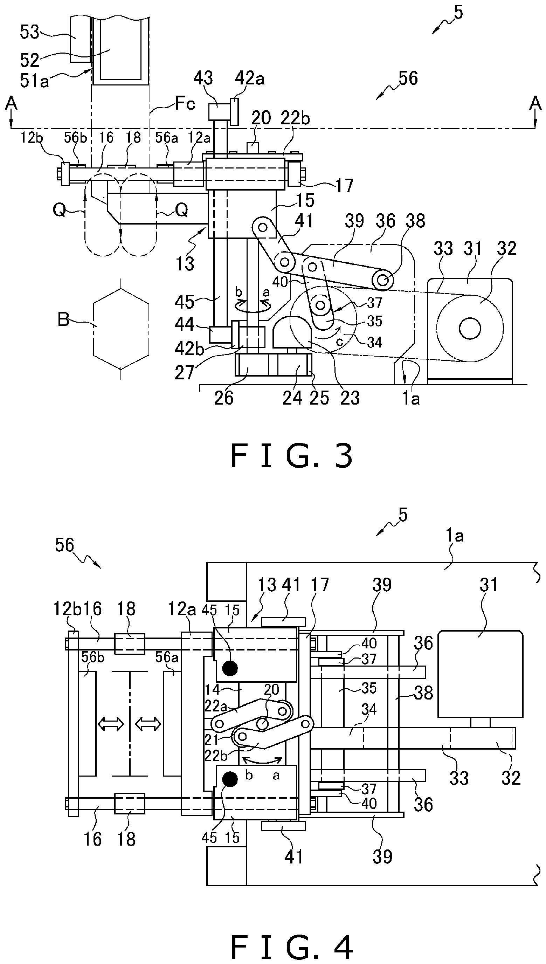

FIG 3 is a right side view of the bag-making and packaging unit 5. FIG 4 is a sectional view along line A-A of FIG 3. In FIG 3 and FIG 4, sealing jaws 56a, 56b extend horizontally rightward and leftward and are attached to jaw bases 12a, 12b, respectively. The jaw bases 12a, 12b are supported by a support unit 13 so as to be movable horizontally forward and rearward.

The support unit 13 has a right and left pair of support blocks 15 interconnected by a connecting frame 14. Support rods 16 that extend forward and rearward are slidably inserted through the support blocks 15. The front jaw base 12b bridges front end portions of the support rods 16, and a connecting base 17 bridges rear end portions of the support rods 16.

The support rods 16 are supported by arm portions 18 that extend forward from the support blocks 15, whereby the support rods 16 are maintained in a horizontal posture. The rear jaw base 12a slidably fits together with the support rods 16 between the arm portions 18 and the support blocks 15.

### (3-1) Configurations of Sealing Jaws 56a, 56b

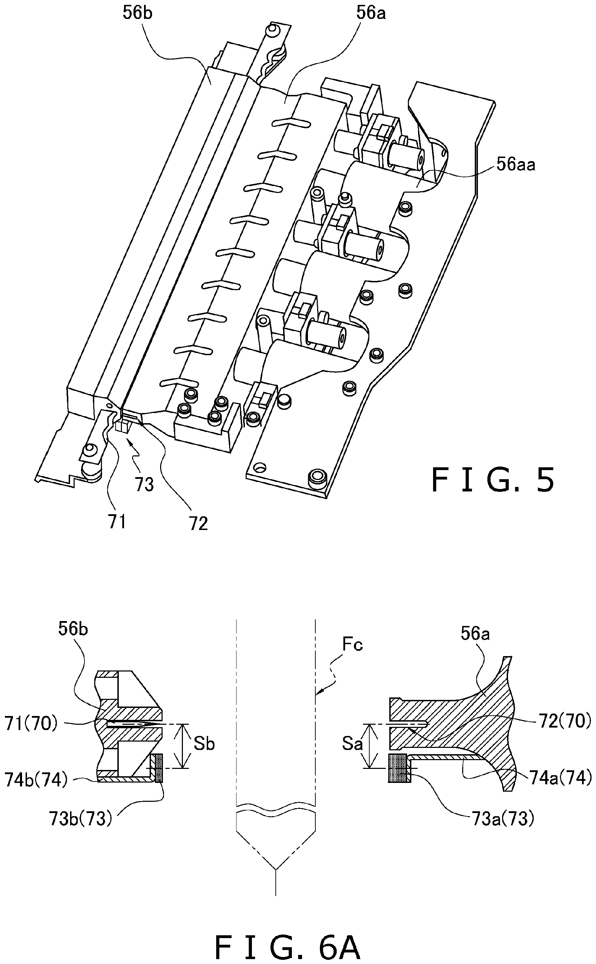

FIG 5 is a perspective view of the pair of sealing jaws 56a, 56b. In FIG 5, the sealing jaw 56a is a horn for ultrasonic sealing, and the sealing jaw 56b is an anvil for ultrasonic sealing.

Three vibration elements 56aa are coupled to the sealing jaw 56a so as to form a row along the sealing direction, and a sealing surface of the sealing jaw 56a is vibrated by these three vibration elements 56aa, whereby the part of the cylindrical film Fc pinched by the sealing jaw 56a and the sealing jaw 56b is sealed.

### (3-2) Transverse Movement of Sealing Jaws 56a, 56b

The sealing jaws 56a, 56b are reciprocally moved forward and rearward by a crank mechanism. As shown in FIG 4, an upper end portion of a spline shaft 20 projects upward from an upper surface of the connecting frame 14, and a crank 21 fits together with the projecting end portion of the spline shaft 20. A link 22b for the front sealing jaw 56b is provided between one rotating end portion of the crank 21 and the connecting base 17, and a link 22a for the rear sealing jaw 56a is provided between the other rotating end portion of the crank 21 and the rear jaw base 12a.

As shown in FIG 4, when the spline shaft 20 rotates in the direction of arrow a from a state in which the sealing jaws 56a, 56b are away from each other, the crank 21 also integrally rotates in the same direction of arrow a and the rotation is converted by the links 22a, 22b into linear motion in forward and rearward directions. The link 22b for the front sealing jaw pushes the connecting base 17 rearward, whereby the entire frame structure configured by the connecting base 17, the right and left pair of support rods 16, and the front jaw base 12b is moved rearward and the front sealing jaw 56b is moved horizontally rearward. At the same time, the link 22a for the rear sealing jaw pushes the rear jaw base 12a forward, whereby the rear sealing jaw 56a is moved horizontally forward.

The distances from the rotational center of the crank 21 to the junctures of the links 22a, 22b are the same, and the shapes of the links 22a, 22b are also the same. Thus, the front and rear pair of sealing jaws 56a, 56b are moved the same distance in mutually opposite directions at the same time by the rotation of the single spline shaft 20. As a result, the sealing jaws 56a, 56b pinch the cylindrical film Fc between themselves and opposingly contact each other (close). When the sealing jaws 56a, 56b opposingly contact each other, they transversely seal the cylindrical film Fc by means of heat and pressure.

When the spline shaft 20 rotates in the direction of arrow b from this state, this time conversely the front sealing jaw 56b moves horizontally forward and, at the same time, the rear sealing jaw 56a moves horizontally rearward the same distance. As a result, the sealing jaws 56a, 56b move away from each other (open).

As shown in FIG 3, the spline shaft 20 stands upright and runs vertically through the connecting frame 14 of the support unit 13. An upper and lower pair of horizontal beams 42a, 42b bridge a front surface of a body 1a of the bag-making and packaging machine 1, a bearing 27 is provided in the inner surface of the lower horizontal beam 42b, and the lower portion of the spline shaft 20 is rotatably supported by the bearing 27.

A timing pulley 26 is attached to the lower end portion of the spline shaft 20, and a timing belt 25 is wound around between the timing pulley 26 and a timing pulley 24 attached to an output shaft of a j aw-opening-and-closing servo motor 23.

That is, the spline shaft 20 is rotated in the directions of a and b, and the sealing jaws 56a, 56b are opened and closed, by the driving of the jaw-opening-and-closing servo motor 23.

### (3-3) Longitudinal Movement of Sealing Jaws 56a, 56b

A right and left pair of guide rods 45 are provided via attachment blocks 43, 44 to the upper and lower horizontal beams 42a, 42b. The guide rods 45 stand upright parallel to the spline shaft 20 and run vertically through the support blocks 15 of the support unit 13. Because of this, the support unit 13 is supported at three points by the two guide rods 45 and the one spline shaft 20. Moreover, as shown in FIG 3, the guide rods 45 and the spline shaft 20 are positioned in the vertices of a triangle as seen in a plan view, so the support unit 13 is stably supported in a plane.

The support unit 13 is reciprocally moved up and down along the guide rods 45 and the spline shaft 20 by a crank-link mechanism. That is, as shown in FIG 3, a right and left pair of vertical walls 36 are provided erectly from the body 1a. As shown in FIG 4, a crank shaft 35 rotatably bridges the vertical walls 36. Crank arms 37 are attached to both ends of the crank shaft 35. As shown in FIG 3, one end each of intermediate links 40 are coupled to rotating end portions of the crank arms 37. Other ends of the intermediate links 40 are coupled to length direction middle portions of pivoting links 39.

As shown FIG 4, a pivot point shaft 38 also rotatably bridges the vertical walls 36. One end each of the pivoting links 39 are attached to both ends of the pivot point shaft 38. As shown in FIG 3, the support blocks 15 of the support unit 13 are coupled via second intermediate links 41 to pivoting end portions of the pivoting links 39.

A jaw-raising-and-lowering servo motor 31 is mounted on top of the body 1a, and a timing belt 33 is wound around between a timing pulley 32 attached to an output shaft of the jaw-raising-and-lowering servo motor 31 and a timing pulley 34 attached to the crank shaft 35.

That is, the crank shaft 35 is rotated in the direction of c, and the support unit 13 is moved up and down, by the driving of the j aw-raising-and-lowering servo motor 31. At that time, the intermediate links 40 are moved up and down by the rotation of the crank arms 37, thereby causing the pivoting links 39 to pivot up and down. The pivoting links 39 reciprocally move the entire support unit 13-and therefore the transverse sealing jaws 56a, 56b-up and down while the second intermediate links 41 absorb displacement between the circular motion and the linear motion.

Because of this, the sealing jaws 56a, 56b execute a box motion that is quadrilateral to oval in shape as seen in a side view and whose path is indicated by reference sign S in FIG 3.

### (3-4) Cutting of Cylindrical Film Fc

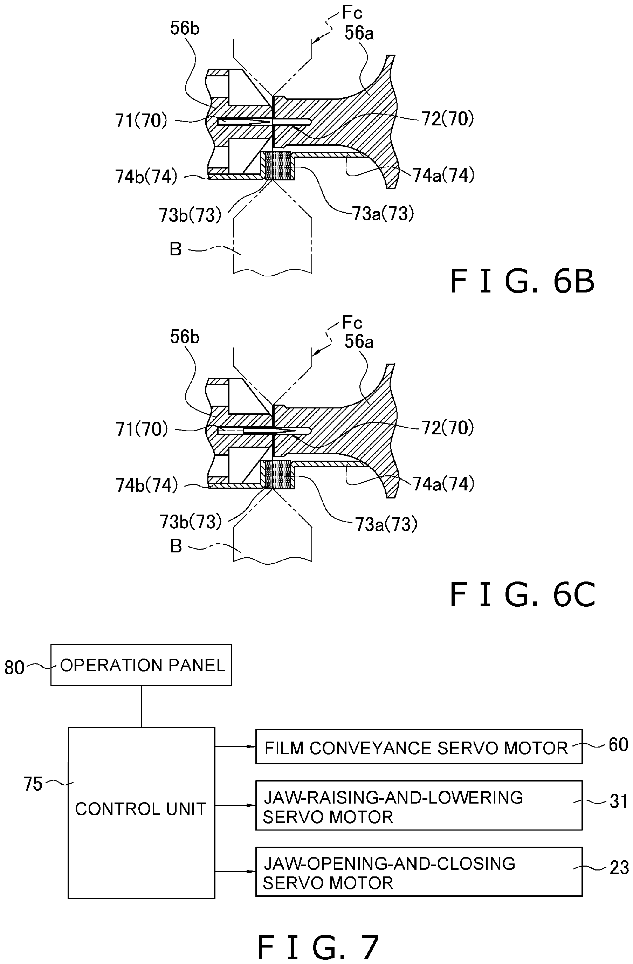

Next, the cutting operation will be described with reference to FIG 6A to FIG 6B. Here, FIG 6Ais a side sectional view of the area around the sealing jaws 56a, 56b before transverse sealing. Furthermore, FIG 6B is a side sectional view of the area around the sealing jaws 56a, 56b during transverse sealing. Moreover, FIG 6C is a side sectional view of the area around the sealing jaws 56a, 56b just after transverse sealing.

In FIG. 6A and FIG 6B, a cutting mechanism 70 is configured by a cutter 71, which is provided in the distal end portion of the sealing jaw 56b, and a slide groove 72, which is provided in the sealing jaw 56a.

Furthermore, metal fittings 74 are provided under the sealing jaws 56a, 56b, and clamps 73 are secured to the metal fittings 74.

Specifically, a metal fitting 74a with an L-shaped cross section is disposed, with the surface of the short side facing the cylindrical film Fc, under the sealing jaw 56a, and a clamp 73a is adhered to the surface of the short side. Furthermore, a height direction center-to-center distance Sa between the slide groove 72 provided in the sealing jaw 56a and the clamp 73a is preferably 10 to 80 mm and in this embodiment is set to 12 mm.

Similarly, a metal fitting 74b with an L-shaped cross section is disposed, with the surface of the short side facing the cylindrical film Fc, under the sealing jaw 56b, and a clamp 73b is secured to the surface of the short side. Furthermore, a height direction center-to-center distance Sb between the cutter 71 provided in the sealing jaw 56b and the clamp 73b is preferably 10 to 80 mm and in this embodiment is set to 12 mm (Sb = Sa).

The clamp 73a and the clamp 73b are disposed opposite each other across the cylindrical film Fc. The clamp 73a and the clamp 73b are elastic members formed of rubber or an elastomer, for example.

Furthermore, the surface of the clamp 73a that opposes the clamp 73b projects a predetermined length (e.g., 0.3 mm) toward the cylindrical film Fc from the distal end of the sealing jaw 56a. Similarly, the surface of the clamp 73b that opposes the clamp 73a projects a predetermined length (e.g., 0.3 mm) toward the cylindrical film Fc from the distal end of the sealing jaw 56b.

Therefore, the clamp 73a and the clamp 73b clamp, sooner than the sealing jaws 56a, 56b sandwich the cylindrical film Fc in order to transversely seal it, the cylindrical film Fc under the portion thereof to be transversely sealed.

Next, in FIG 6C, the cutter 71 is advanced toward the slide groove 72 by a drive mechanism such as an air cylinder in accordance with the timing when the cylindrical film Fc is transversely sealed. At this time, the cutter 71 is pushed against the width direction substantially center position of the transversely sealed portion, so the portion that has been transversely sealed is cut.

At this time, the clamp 73a and the clamp 73b clamp the cylindrical film Fc under the transversely sealed portion, so even when the cutter 71 is pushed against the transversely sealed portion and the portion that has been sealed is cut, the cylindrical film Fc thereunder is prevented from being pulled.

Then, when the portion that has been transversely sealed is cut and the sealing jaws 56a, 56b and the clamps 73 move away from the cylindrical film Fc, one bag is separated and discharged to a chute conveyor 19 (see FIG 1).

### (4) Control Unit 75

FIG 7 is a control block diagram of the bag-making and packaging machine 1. As shown in FIG 7, the bag-making and packaging machine 1 is equipped with a control unit 75. The control unit 75 controls a film conveyance servo motor 60, the jaw-raising-and-lowering servo motor 31, and the j aw-opening-and-closing servo motor 23.

The control unit 75 stores in a memory, as control with respect to the film conveyance servo motor 60, a program for operation in an intermittent mode, in which it intermittently conveys the cylindrical film Fc, and a continuous mode, in which it continuously conveys the cylindrical film Fc at a uniform speed.

### (4-1) Continuous Mode

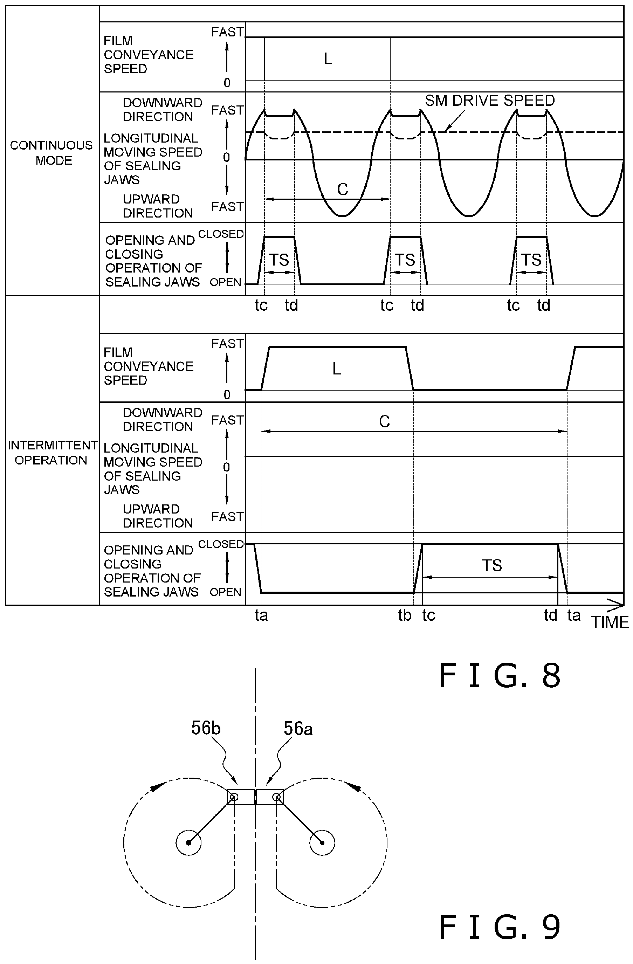

FIG 8 is a time chart of the continuous mode and the intermittent mode. In FIG 8, when executing the continuous mode, the control unit 75 performs transverse sealing while conveying the cylindrical film Fc at a uniform speed (transverse sealing time TS: time tc to td).

Furthermore, when executing transverse sealing, the control unit 75 performs transverse sealing during uniform speed conveyance of the cylindrical film Fc, so the sealing jaws 56a, 56b move downward at the same speed as the conveyance speed of the cylindrical film Fc at least during the transverse sealing time TS.

In order to move at a uniform speed the sealing jaws 56a, 56b in the longitudinal direction at a predetermined speed in this way, in the bag-making and packaging machine 1, as indicated by the dashed line in FIG 8, the drive speed of the j aw-raising-and-lowering servo motor 31 (SM 31 in the drawing) is lowered during that period along a sinusoidal curve. The jaw-raising-and-lowering servo motor 31 rotates at a uniform speed as its basic operation. As a result, the speed at which the sealing jaws 56a, 56b move in the longitudinal direction (the speed at which they are raised and lowered) traces a sinusoidal curve as shown in the drawing.

In the continuous mode, the operation of conveying the cylindrical film Fc is relatively simple. Thus, control is spared from becoming complex even at startup and at shutdown. Moreover, because the cylindrical film Fc is conveyed at a uniform speed, snaking of the cylindrical film Fc is inhibited, and a situation where locally large tension acts on the cylindrical film Fc is reduced.

The period indicated by reference sign C in FIG 8 is a period of one cycle of operation of the bag-making and packaging machine 1. Furthermore, the hatched region indicated by reference sign L represents the length of the bags B that are obtained. In the continuous mode, the period C of one cycle of operation can be shortened in exchange for the transverse sealing time TS and the length L of the bags B being subject to restriction, which more than anything is suitable for high-speed operation.

In that case, the transverse sealing time TS, the length L of the bags B, and the period C of one cycle of operation have an effect on each other. For example, if one wants to increase the transverse sealing time TS, it suffices to lower the conveyance speed of the cylindrical film Fc and the moving speed of the sealing jaws 56a, 56b. However, as a result, the period C of one cycle of operation becomes longer. Furthermore, for example, if one wants to increase the length L of the bags B, it suffices to lower the moving speed of the sealing jaws 56a, 56b during the non-sealing time (time td to tc). However, the period C of one cycle of operation likewise becomes longer.

Namely, by lengthening somewhat the period C of one cycle of operation, the transverse sealing time TS and the length L of the bags B can be increased even in the continuous mode.

### (4-2) Intermittent Mode

In FIG. 8, when executing the intermittent mode, the control unit 75 brings the sealing jaws 56a, 56b into opposing contact with each other and performs transverse sealing (transverse sealing time TS: time tc to td) while the cylindrical film Fc is stopped (time tb to ta).

Furthermore, when executing transverse sealing, the control unit 75 synchronizes the moving speed of the sealing jaws 56a, 56b in the longitudinal direction with the conveyance speed of the cylindrical film Fc in the longitudinal direction so that the transversely sealed portion does not go beyond a predetermined sealing region and sealing defects do not arise.

Namely, in the intermittent mode in which transverse sealing is performed while the cylindrical film Fc is stopped, the sealing jaws 56a, 56b do not move in the longitudinal direction. The sealing jaws 56a, 56b are fixed in a predetermined height position. Of course, the predetermined height position may be arbitrarily changed.

In the intermittent mode, the film F is conveyed during time ta to tb. This film conveyance time (ta to tb) can be freely set. Furthermore, the cylindrical film Fc is transversely sealed during time tc to td. This transverse sealing time TS (tc to td) can also be freely set.

Thus, although the period C of one cycle of operation is relatively long and production capacity tends to be low, in the intermittent mode the conveyance of the cylindrical film Fc and the opening and closing of the sealing jaws 56a, 56b can be performed independently of each other, so the transverse sealing time TS can be made sufficiently long so that transverse sealing can be performed well even with a thick film F, and it is possible to accommodate bags B of any length L.

### (5) Operation Panel 80

As shown in FIG 5, the bag-making and packaging machine 1 is equipped with the operation panel 80 that outputs operating condition designation signals to the control unit 75. An operator designates operating conditions for the bag-making and packaging machine 1 by operating the operation panel 80.

### (6) Characteristics

(6-1)
In the bag-making and packaging machine 1, tension in a direction in which the bags B are lifted up occurs when the cutter 71 cuts the transversely sealed portions, but because the portions under the transversely sealed portions are restrained by the clamp 73a and the clamp 73b, the bags B are not lifted up and shifting of the cutting position is prevented.

(6-2)
In the bag-making and packaging machine 1, the pull-down belt mechanisms 52 restrain the cylindrical film Fc above the sealing jaws 56a, 56b, so there is no need to provide clamps above.

(6-3)
In the bag-making and packaging machine 1, the size of the bags that can be made is 100 to 500 mm. Furthermore, the height direction center-to-center distance Sa between the slide groove 72 and the clamp 73a and the height direction center-to-center distance Sb between the cutter 71 and the clamp 73b are 10 to 80 mm. In particular, in the case of the box motion, it is desired that the center-to-center distance Sa and the center-to-center distance Sb be set to 50 mm to 80 mm (Sb = Sa).

Because of this, even if there are contents in the upper portion of a bag, a situation where the contents are compressed by the clamps is avoided.

(6-4)
The bag-making and packaging machine 1 performs continuous bag-making in which it makes bags while continuously conveying the cylindrical film Fc.

### (7) Example Modification

In the transverse sealing mechanism 56 of the embodiment, the sealing jaws 56a, 56b undergo a motion called a box motion in which they are moved toward/away from each other in forward and rearward directions and are also moved in upward and downward directions, but the motion of the transverse sealing mechanism 56 is not limited to this.

For example, FIG 9 is a conceptual diagram of the transverse sealing mechanism 56 of the bag-making and packaging machine 1 pertaining to an example modification. In FIG 9, the sealing jaws 56a, 56b may undergo an operation called a D-motion in which they are circularly driven in D-like shapes as seen in a side view.

It will be noted that in the case of the D-motion, it is desired that the center-to-center distance Sa and the center-to-center distance Sb be set to 12 to 25 mm (Sb = Sa).

### REFERENCE SIGNS LIST

- 1: Bag-making and Packaging Machine
- 52: Pull-down Belt Mechanisms (Film Conveyance Unit)
- 56a, 56b: Pair of Sealing Jaws (Pair of Sealing Members)
- 70: Cutting Mechanism (Cutting Member)
- 71: Cutter (Cutting Member)
- 72: Slide Groove (Cutting Member)
- 73: Clamps
- 73a: Clamp
- 73b: Clamp
- Fc: Cylindrical Film
- Sa: Center-to-center Distance
- Sb: Center-to-center Distance

### CITATION LIST

### PATENT LITERATURE

Patent Document 1: JP-ANo. 2015-58964

## Claims

1. A bag-making and packaging machine that makes bags by forming into a cylindrical shape a film that is conveyed and putting product inside the cylindrical film, the bag-making and packaging machine comprising:
a pair of ultrasonic sealing members (56a, 56b) that sandwich the cylindrical film along a direction intersecting its conveyance direction and perform transverse sealing;
a cutting member (71) that moves between the pair of sealing members (56a, 56b) and cuts transversely sealed portions of bags that have been made; and **characterized by**
clamps (73) that are provided under the pair of sealing members (56a, 56b) and the cutting member (71) and restrain the bags when the transversely sealed portions are cut.

2. The bag-making and packaging machine according to claim 1, further comprising a film conveyance unit (52) that is provided above the pair of sealing members (56a, 56b) and the cutting member (71) and conveys the cylindrical film, wherein the film conveyance unit restrains the cylindrical film when the transversely sealed portions are cut.

3. The bag-making and packaging machine according to claim 1 or claim 2, wherein when the transversely sealed portions are cut, the bags under the cutting position hang down from the transversely sealed portions.

4. The bag-making and packaging machine according to any one of claim 1 to claim 3, wherein
the size of the bags that can be made is 100 to 500 mm, and
a height direction center-to-center distance between the clamps (56a, 56b) and the cutting member (71) is 10 to 80 mm.

5. The bag-making and packaging machine according to any one of claim 1 to claim 4, wherein the bag-making and packaging machine performs continuous bag-making in which it makes bags while continuously conveying the cylindrical film.

6. The bag-making machine according to any of the preceding claims, wherein the pair of sealing members comprise a first sealing jaw (56a) and a second sealing jaw (56b), and metal fittings (74) provided under the sealing jaws, wherein the clamps comprise a first clamp (73a) and a second clamp (73b), said clamps being secured to the metal fittings, and wherein the first and second clamps (73a,73b) clamp the cylindrical film under the transversely sealed portion when the transversely sealed portion is cut.

7. The bag-making and packaging machine of claim 6, wherein a surface of the first clamp (73a) that opposes the second clamp (73b) projects a predetermined length toward the cylindrical film from a distal end of the first sealing jaw 56a, and a surface of the second clamp (73b) that opposes the first clamp (73a) projects a predetermined length toward the cylindrical film from a distal end of the second sealing jaw (56b), whereby the first clamp (73a) and the second clamp (73b) clamp the cylindrical film sooner than the first and second sealing jaws (56a, 56b) sandwich the cylindrical film in order to transversely seal it.

## Patentansprüche

1. Beutelherstellungs- und Verpackungsmaschine, die Beutel herstellt, indem sie eine Folie, die befördert wird, in eine zylindrische Form ausbildet und ein Produkt in die zylindrische Folie einbringt, wobei die Beutelherstellungs- und Verpackungsmaschine aufweist:
ein Paar Ultraschall-Versiegelungselemente (56a, 56b), die die zylindrische Folie entlang einer Richtung, die ihre Förderrichtung schneidet, zwischen sich nehmen und eine Querversiegelung durchführen;
ein Schneidelement (71), das sich zwischen dem Paar der Versiegelungselemente (56a, 56b) bewegt und in Querrichtung versiegelte Abschnitte von hergestellten Beuteln abschneidet; und **gekennzeichnet durch**
Klemmen (73), die unter dem Paar der Versiegelungselemente (56a, 56b) und dem Schneidelement (71) vorgesehen sind und die Beutel festhalten, wenn die quer versiegelten Abschnitte geschnitten werden.

2. Beutelherstellungs- und Verpackungsmaschine nach Anspruch 1, die ferner eine Folienfördereinheit (52) aufweist, die über dem Paar der Versiegelungselemente (56a, 56b) und dem Schneidelement (71) vorgesehen ist und die zylindrische Folie befördert, wobei die Folienfördereinheit die zylindrische Folie festhält, wenn die quer gesiegelten Abschnitte geschnitten werden.

3. Beutelherstellungs- und Verpackungsmaschine nach Anspruch 1 oder Anspruch 2, wobei beim Schneiden der querversiegelten Abschnitte die Beutel unter der Schneidposition von den querversiegelten Abschnitten herabhängen.

4. Beutelherstellungs- und Verpackungsmaschine nach einem der Ansprüche 1 bis 3, wobei
die Größe der Beutel, die hergestellt werden können, 100 bis 500 mm beträgt und
der Abstand in Höhenrichtung von Mitte zu Mitte zwischen den Klemmen (56a, 56b) und dem Schneidelement (71) 10 bis 80 mm beträgt.

5. Beutelherstellungs- und Verpackungsmaschine nach einem der Ansprüche 1 bis 4, wobei die Beutelherstellungs- und Verpackungsmaschine eine kontinuierliche Beutelherstellung durchführt, bei der sie Beutel herstellt, während sie die zylindrische Folie kontinuierlich befördert.

6. Beutelherstellungsmaschine nach einem der vorhergehenden Ansprüche, wobei das Paar der Versiegelungselemente eine erste Versiegelungsbacke (56a) und eine zweite Versiegelungsbacke (56b) und Metallbeschläge (74) aufweist, die unter den Versiegelungsbacken vorgesehen sind, wobei die Klemmen eine erste Klemme (73a) und eine zweite Klemme (73b) aufweisen, wobei die Klemmen an den Metallbeschlägen befestigt sind, und wobei die erste und die zweite Klemme (73a, 73b) die zylindrische Folie unter den quer gesiegelten Abschnitt klemmen, wenn der quer gesiegelte Abschnitt geschnitten wird.

7. Beutelherstellungs- und Verpackungsmaschine nach Anspruch 6, wobei eine Fläche der ersten Klemme (73a), die der zweiten Klemme (73b) gegenüberliegt, um eine vorbestimmte Länge zur zylindrischen Folie von einem distalen Ende der ersten Versiegelungsbacke 56a vorsteht, und eine Oberfläche der zweiten Klammer (73b), die der ersten Klammer (73a) gegenüberliegt, um eine vorbestimmte Länge zur zylindrischen Folie von einem distalen Ende der zweiten Versiegelungsbacke (56b) vorsteht, wodurch die erste Klemme (73a) und die zweite Klemme (73b) die zylindrische Folie früher einklemmen, als die erste und die zweite Versiegelungsbacke (56a, 56b) die zylindrische Folie zwischen sich nehmen, um sie in Querrichtung zu versiegeln.

## Revendications

1. Machine de fabrication de sacs et d'emballage produisant des sacs en façonnant, pour lui donner une forme cylindrique, une pellicule acheminée, et en plaçant un produit à l'intérieur de la pellicule cylindrique, la machine de fabrication de sacs et d'emballage comprenant :
une paire d'éléments de scellage ultrasoniques (56a, 56b) prenant en sandwich la pellicule cylindrique dans une direction croisant sa direction d'acheminement, et effectuant un scellage transversal ;
un élément de coupe (71) se déplaçant entre la paire d'éléments de scellage (56a, 56b), et coupant transversalement des parties scellées de sacs qui ont été façonnés ; et **caractérisé par** des
pinces (73) placées sous la paire d'éléments de scellage (56a, 56b) et l'élément de coupe (71), et retenant les sacs lors de la coupe des parties scellées transversalement.

2. Machine de fabrication de sacs et d'emballage selon la revendication 1, comprenant en outre une première unité d'acheminement de la pellicule (52) agencée au-dessus de la paire d'éléments de scellage (56a, 56b) et de l'élément de coupe (71), et acheminant la pellicule cylindrique, l'unité d'acheminement de la pellicule retenant la pellicule cylindrique lors de la coupe des parties scellées transversalement.

3. Machine de fabrication de sacs et d'emballage selon la revendication 1 ou la revendication 2, les parties scellées transversalement étant coupées, les sacs sous la position de coupe étant suspendus des parties scellées transversalement.

4. Machine de fabrication de sacs et d'emballage selon une quelconque des revendications 1 à 3,
les sacs pouvant être réalisés mesurant de 100 à 500 mm, et
l'entraxe dans le sens de la hauteur entre les pinces (56a, 56b) et l'élément de coupe (71) mesurant de 10 à 80 mm.

5. Machine de fabrication de sacs et d'emballage selon une quelconque des revendications 1 à 4, la machine de fabrication de sacs et d'emballage effectuant une fabrication de sacs en continu dans le cadre de laquelle elle produit des sacs tout en procédant au déplacement en continu de la pellicule cylindrique.

6. Machine de fabrication de sacs selon une quelconque des revendications précédentes, la paire d'éléments de scellage comprenant une première mâchoire de scellage (56a) et une deuxième mâchoire de scellage (56b), et des raccords métalliques (74) étant agencés sous les mâchoires de scellage, les pinces comprenant une première pince (73a) et une deuxième pince (73b), lesdites pinces étant fixées aux raccords métalliques, et les première et deuxième pinces (73a, 73b) fixant la pellicule cylindrique sous la partie scellée transversalement lors de la coupe de la partie scellée transversalement.

7. Machine de fabrication de sacs et d'emballage selon la revendication 6, une surface de la première pince (73a) opposant la deuxième pince (73b) étant saillante d'une longueur prédéterminée en direction de la pellicule cylindrique depuis une extrémité distale de la première mâchoire de scellage (56a), et une surface de la deuxième pince (73b) opposant la première pince (73a) étant saillante d'une longueur prédéterminée en direction de la pellicule cylindrique depuis une extrémité distale de la deuxième mâchoire de scellage (56b), la première pince (73a) et la deuxième pince (73b) fixant la pellicule cylindrique avant la prise en sandwich de la pellicule cylindrique par les première et deuxième mâchoires de scellage (56a, 56b) afin de procéder à son scellage transversal.
